# EUROPÄISCHE PATENTSCHRIFT

(11) **EP 2 190 924 B1**
(45) Veröffentlichungstag und Bekanntmachung des Hinweises auf die Patenterteilung: **25.05.2011**
(21) Anmeldenummer: 08787530.8
(22) Anmeldetag: 27.08.2008
(51) Int. Cl.: C08L 71/00

(54) **BLENDS AUS VERZWEIGTEN POLYARYLETHERN UND HYDROPHILEN POLYMEREN**
BLENDS FROM BRANCHED POLYARYL ETHERS AND HYDROPHILIC POLYMERS
MÉLANGES DE POLYARYLÉTHERS RAMIFIÉS ET DE POLYMÈRES HYDROPHILES

(30) Priorität: 06.09.2007 EP 07017463
(43) Veröffentlichungstag der Anmeldung: 02.06.2010
(73) Patentinhaber: BASF SE, 67056 Ludwigshafen (DE); National University of Singapore, Singapore 119077 (SG)
(72) Erfinder: WEBER, Martin, 67487 Maikammer (DE); MALETZKO, Christian, 67122 Altrip (DE); YANG, Qian, Singapore 117576 (SG); CHUNG, Tai-Shung, Singapore 117576 (SG)
(74) Vertreter: Féaux de Lacroix, Stefan
(86) Internationale Anmeldenummer: PCT/EP2008/061238
(87) Internationale Veröffentlichungsnummer: WO 2009/030620

(56) Entgegenhaltungen:
- EP-A- 0 376 347
- EP-A- 1 681 311
- WO-A-2004/005391
- WO-A-2007/035402
- WO-A-2008/063719
- WO-A-2008/066974
- US-A1- 2005 220 841

## Beschreibung

Die vorliegende Erfindung betrifft Polymermischungen, enthaltend die Komponenten
(a) von 40 bis 95 Gew.-% mindestens eines Polyarylether-Copolymers aufgebaut aus
   (a1) von 50 bis 99.9 Gew.-% Bausteine der allgemeinen Formel I 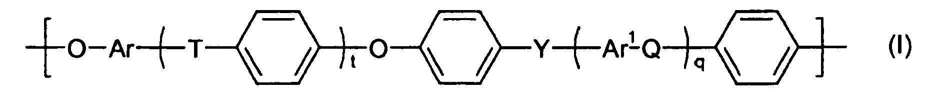 mit folgenden Bedeutungen
      - t, q:: unabhängig voneinander 0, 1, 2 oder 3,
      - Q, T, Y:: unabhängig voneinander jeweils eine chemische Bindung oder Gruppe, ausgewählt aus -O-, -S-, -SO₂-, S=O, C=O, -N=N-, -R^{a}C=CR^{b}, -CR^{c}R^{d}-, wobei R^{a} und R^{b} unabhängig voneinander jeweils für ein Wasserstoffatom oder eine C₁-C₁₂-Alkylgruppe stehen und R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
      - Ar, Ar¹:: unabhängig voneinander C₆-C₁₈-Arylengruppe, und
      von 0 bis 40 Gew.-% weitere Bausteine II ausgewählt aus Segmenten ein oder mehrerer thermoplastischer Polymere, und
   (a2) von 0,1 bis 10 Gew.-% mindestens eines Vernetzers V, der wenigstens drei Hydroxyfunktionalitäten aufweist,
   wobei der mindestens eine Vernetzer V in Komponente (a) in umgesetzter Form vorliegt die Summe der Gew.-% aus (a1) und (a2) 100 Gew.-% ergibt,
   und
(b) von 5 bis 60 Gew.-% mindestens eines hydrophilen Polymers ausgewählt aus Polyvinylpyrrolidon, Polyvinylpyrrolidon-Copolymeren, Polyethylenglykol, Polypropylenglykol, Copolymeren aus Ethylenglykol und Propylenglykol, wassedöslichen Cellulosederivaten, Polyamid, Polyvinylacetat und Polyvinylalkohol,
wobei die Summe der Gew.-% aus Komponente (a) und (b) 100 Gew.-% ergibt.

Außerdem betrifft die vorliegende Erfindung getrennt vorliegende Kombinationen aus den vorgenannten Komponenten (a) und (b) zur gemeinsamen Anwendung. Darüber hinaus betrifft die Erfindung Polymermembranen enthaltend die vorgenannten Polymermischungen sowie ein Verfahren zu deren Herstellung und die Verwendung der Polymermembrane zur Herstellung von Dialysefiltern. Außerdem betrifft die vorliegende Erfindung Dialysefilter, welche die vorgenannten Hohlfasermembrane enthalten.

Polyarylether gehören zur Gruppe der Hochleistungsthermoplaste und finden aufgrund ihrer hohen Wärmeform- und Chemikalienbeständigkeit Verwendung in hoch beanspruchten Anwendungen, siehe G. Blinne, M. Knoll, D. Müller, K. Schlichting, Kunststoffe 75, 219 (1985), E. M. Koch, H.-M. Walter, Kunststoffe 80, 1146 (1990) und D. Döring, Kunststoffe 80, 1149 (1990).

Um das vorhandene Eigenschaftsspektrum der Polyarylether zu erweitern wurden verzweigte Polyarylether entwickelt. So offenbart die deutsche Offenlegungsschrift DE-A 2305413 verzweigte Polyarylethersulfone, welche gegenüber den linearen Polyarylethersulfonen eine geringere Anfälligkeit gegenüber Spannungsrisskorrosion, eine verbesserte Beständigkeit gegenüber ungesättigten Polyesterharzen sowie eine verringerte Brennbarkeit aufweisen.

Ein in Macromolecular Symposia 2003, 199, 243-252 erschienener Aufsatz über die Synthese und Charakterisierung von verzweigten Polyarylethern offenbart, dass der Einsatz verzweigter Polyethersulfone im Allgemeinen die Fließfähigkeiten der Polyethersulfone verbessert, aber mechanische Eigenschaften, wie zum Beispiel die Zähigkeit, verschlechtern.

Aufgrund der guten Hydrolysebeständigkeit, begründet in der geringen Hydrophilie, werden lineare Polyarylether seit vielen Jahren als Membranmaterialien verwendet. So beschreiben zum Beispiel S. Savariar et al., Desalination 144 (2002) 15 bis 20, die Verwendung von Polysulfon zur Herstellung von Dialysemembranen. Da Polysulfon relativ wenig Wasser absorbiert, wird bei der Herstellung solcher Dialysemembranen üblicherweise ein hydrophiles Polymer, wie beispielsweise Polyvinylpyrrolidon (PVP) als Additiv verwendet.

Die DE-A 10 2005 001 599 beschreibt funktionalisierte, verzweigte Polyarylether-Copolymere, die sulfonierte und nicht-sulfonierte Einheiten enthalten. Die Herstellung der sulfonierten Polyarylether-Copolymere erfolgt über eine Sulfonierung aus den entsprechenden verzweigten Polyarylether-Copolymeren. Die Veröffentlichungsschrift erwähnt die Verwendung der sulfonierten Copolymere zur Herstellung von Membranen. Außerdem finden Polymerblends aus den vorgenannten sulfonierten Polyarylether-Copolymeren und zahlreichen Blendpartnern Erwähnung, wobei unter anderem Polyvinylpyrrolidon aufgezählt wird. Die DE-A 10 2005 001 599 offenbart jedoch weder Blends aus nicht-sulfonierten verzweigten Polyarylethern noch geht sie auf die besonderen Anforderungen bei der Verwendung zur Herstellung von Hohlfasermembranen ein.

Die Herstellung von Hohlfasermembranen für Dialysemodule stellt besondere Anforderungen an ein Polymermaterial. Hierbei sind insbesondere die Trennleistung und die Ausschlussgrenze betreffend das Molekulargewicht und somit die Fähigkeit, bestimmte Toxine bei der Dialyse herauszufiltern, sowie eine hohe Beständigkeit unter den Bedingungen der Sterilisation und eine hohe Beständigkeit der Eigenschaften der Membran über einen langen Zeitraum zu nennen.

Beispielsweise beschreibt die EP 0509663 B2 Dialysemoldule mit selektiv durchlässigen Hohlfasermembranen auf Basis einer Mischung von Polyethersulfon und einem hydrophilen Polymer wie zum Beispiel Polyvinylpyrrolidon oder Polyethylenglykol. Die EP 0615778 A1 offenbart ein Verfahren zur Herstellung hydrophiler Membrane unter Verwendung von hydrophoben Polymeren wie Polyethersulfonen und hydrophiler Polymere unter Verwendung von Polyvinylpyrrolidon.

Die mechanischen Eigenschaften im Dauergebrauch, die Verarbeitbarkeit bei der Herstellung und die Trennleistung, insbesondere die Ausschlussgrenze (definiert als Molekulargewicht, oberhalb dessen eine Abtrennung erfolgt) sind bei den in bekannten Dialysemembranen verwendeten Materialien jedoch nicht in allen Fällen zufrieden stellend.

Aufgabe der vorliegenden Erfindung ist es, Polymermischungen bereitzustellen, die gegenüber den bekannten, in Dialysemembranen eingesetzten Polymermischungen eine verringerte Ausschlussgrenze aufweisen. Darüber hinaus sollte die Glastemperatur der Polymermischung erhöht werden. Gleichzeitig sollte die Beständigkeit unter den Bedingungen der Sterilisation sowie die mechanische Beständigkeit im Dauergebrauch zufrieden stellend sein. Darüber hinaus sollte die Verarbeitbarkeit der Polymermischung bei der Herstellung im Nassspinnverfahren verbessert werden. Eine weitere Aufgabe bestand darin, ein Verfahren zur Herstellung von Polymermembranen, insbesondere von Hohlfasermembranen für Dialysefilter, unter Verwendung der vorgenannten Polymermischungen bereitzustellen.

Die vorgenannten Aufgaben werden gelöst durch die erfindungsgemäßen Polymermischungen und das erfindungsgemäße Verfahren.

### Komponente (a)

Erfindungsgemäß enthält die Polymermischung als Komponente
(a) von 40 bis 95 Gew.-% mindestens eines Polyarylether-Copolymers aufgebaut aus
   (a1) von 50 bis 99,9 Gew.-% Bausteine der allgemeinen Formel I 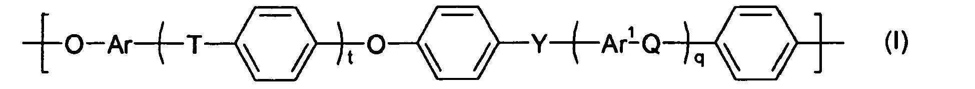 mit folgenden Bedeutungen:
      - t, q:: unabhängig voneinander 0, 1, 2 oder 3,
      - Q, T, Y:: unabhängig voneinander jeweils eine chemische Bindung oder Grup- pe, ausgewählt aus -O-, -S-, -SO₂-, S=O, C=O, -N=N-, -R^{a}C=CR^{b},- CR^{c}R^{d}-, wobei R^{a} und R^{b} unabhängig voneinander jeweils für ein Wasserstoffatom oder eine C₁-C₁₂-Alkylgruppe stehen und R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d}, wenn sie für eine Alkyl-, Alkoxy- oder Arylgruppe stehen, unabhängig voneinander mit Fluor- und/oder Chloratomen substituiert sein können oder wobei R^{c} und R^{d} zusammen mit dem C-Atom an das sie gebunden sind, eine C₃-C₁₂-Cycloalkygruppe bilden können, die mit einer oder mehreren C₁-C₆-Alkylgruppen substituiert sein, wo- bei wenigstens eines aus Q, T und Y von -O- verschieden ist, und wenigstens eines aus Q, T und Y für -SO₂- steht und
      - Ar, Ar¹:: unabhängig voneinander eine C₆-C₁₈-Arylengruppe, wobei diese mit C₁-C₁₂-Alkyl-, C₆-C₁₈-Aryl-, C₁-C₁₂-Alkoxygruppen oder Halogenato- men substituiert sein kann, und
      von 0 bis 40 Gew.-% weitere Bausteine II ausgewählt aus Segmenten ein oder mehrerer thermoplastischer Polymere, und
   (a2) von 0,1 bis 10 Gew.-% mindestens eines Vernetzers V, der wenigstens drei Hydroxyfunktionalitäten aufweist, wobei der mindestens eine Vernetzer in Komponente (a) in umgesetzter Form vorliegt und die Summe der Gew.-% aus (a1) und (a2) 100 Gew.-% ergibt.

Q, T, und Y können somit unabhängig voneinander jeweils eine chemische Bindung oder eine der oben genannten Atome oder Gruppen sein, wobei unter chemischen Bindung zu verstehen ist, dass in diesem Fall die links benachbarte und die rechts benachbarte Gruppe direkt miteinander über eine chemische Bindung verknüpft vorliegen. Erfindungsgemäß ist wenigstens eine Element der Gruppe aus Q, T und Y verschieden von -O-, und wenigstens ein Element aus der Gruppe aus Q, T und Y entspricht -SO₂-. In einer bevorzugten Ausführungsform bedeuten Q, T und Y unabhängig voneinander -O- oder -SO₂-.

Bevorzugte C₁-C₁₂-Alkylgruppen umfassen lineare und verzweigte, gesättigte Alkylgruppen mit von 1 bis 12 Kohlenstoffatomen. Insbesondere können folgende Reste genannt werden: C₁-C₆-Alkylrest, wie Methyl, Ethyl, n-Propyl, i-Propyl, n-Butyl, sec.-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Sofern Ar und/oder Ar¹ mit C₁-C₁₂-Alkoxygruppen substituiert ist, dann kommen als Alkylreste in den Alkoxygruppen insbesondere die weiter oben definierten Alkylgruppen mit von 1 bis 12 Kohlenstoffatomen in Betracht. Geeignete Cycloalkylreste umfassen insbesondere C₃-C₁₂Cyclo-alkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, - pentyl, -hexyl, Cyclohexylmethyl, -dimethyl, -trimethyl.

Als C₆-C₁₈-Arylengruppen Ar und Ar¹ kommen insbesondere Phenylengruppen, insbesondere 1,2-, 1,3- und 1,4-Phenylen, Naphthylengruppen, insbesondere 1,6-, 1,7-, 2,6-und 2,7-Naphthylen, sowie die von Anthracen, Phenanthren und Naphthacen abgeleiteten Brückengruppen in Betracht. Vorzugsweise bedeutet Ar¹ unsubstituiertes C₆-C₁₂-Arylen, das heißt Phenylen, insbesondere 1,2-, 1,3- oder 1,4-Phenylen, oder Naphthylen.

Zur Herstellung der erfindungsgemäßen Polyarylether-Copolymere werden als Monomere die entsprechenden Dihydroxy- bzw. Dihalogen-Verbindungen, bevorzugt die Chlor- oder Fluorverbindungen, eingesetzt. Beispielhaft ist die Umsetzung von Dichlordiphenylsulfon mit Dihydroxydiphenylsulfon und Hydrochinon in den entsprechenden Mengenverhältnissen in einer Polykondensationsreaktion bei gleichzeitiger Freisetzung von Chlorwasserstoff genannt.

Das molare Verhältnis von Monomeren mit Hydroxyfunktionalitäten zu Monomeren mit Halogenfunktionalitäten liegt bei 0,9 zu 1,1 bis 1,1 zu 0,9, bevorzugt bei 0,95 zu 1,05 bis 1,05 zu 0,95, besonders bevorzugt bei 1 zu 1. Liegen verschiedene Monomere mit Hydroxyfunktionalitäten oder mit Halogenfunktionalitäten vor, so werden jeweils die molaren Mengen in Summe betrachtet.

Besonders bevorzugt ist die Umsetzung der Monomere in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist, insbesondere Kaliumcarbonat mit einer volumengewichteten mittleren Teilchengröße von weniger als 100 Mikrometer, bestimmt mit einem Partikelgrößenmessgerät in einer Suspension in N-Methylpyrrolidon. Eine besonders bevorzugte Kombination ist N-Methylpyrrolidon als Lösungsmittel und Kaliumcarbonat als Base.

Die Umsetzung der geeigneten Monomere wird bei einer Temperatur von 80 bis 250 °C, bevorzugt 100 bis 220 °C durchgeführt. Die Umsetzung wird für 2 bis 12 h, bevorzugt 3 bis 8 h durchgeführt. Nach Beendigung der Polykondensationsreaktion kann dem Reaktionsgemisch ein monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon, zugesetzt werden. Diese Verbindungen reagieren mit den Hydroxygruppen an den Enden der Makromoleküle und bilden somit die Anfangs- bzw. Endstücke der Makromoleküle.

Die Umsetzung in der Schmelze ist ebenfalls bevorzugt. Die Polykondensation in der Schmelze wird bei einer Temperatur von 140 bis 290 °C, bevorzugt 150 bis 280 °C durchgeführt.

In den erfindungsgemäßen Polyarylethern vorzugsweise vorliegende Bausteine der allgemeinen Formel I sind solche, die mindestens eine der folgenden wiederkehrenden Struktureinheiten Ia bis Io enthalten:

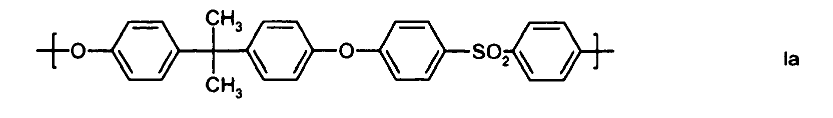

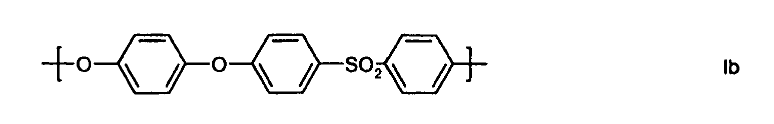

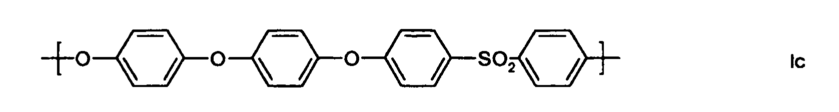

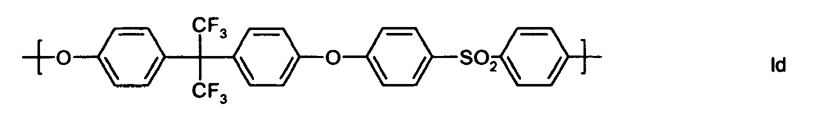

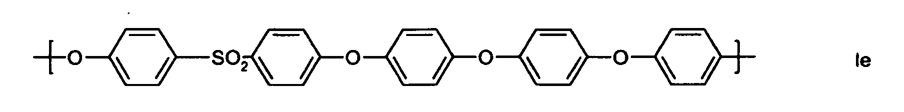

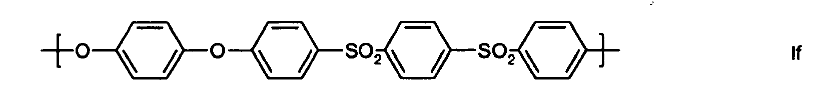

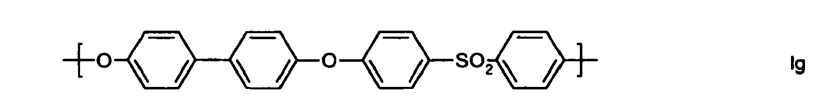

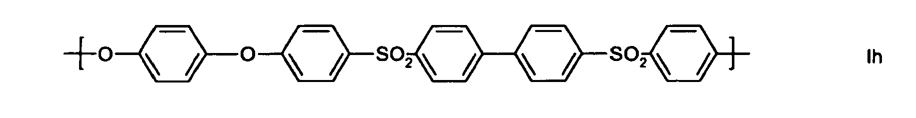

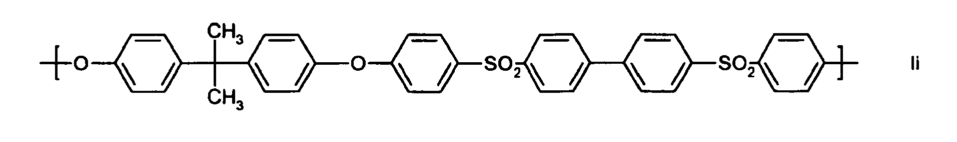

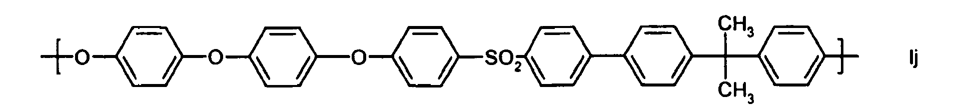

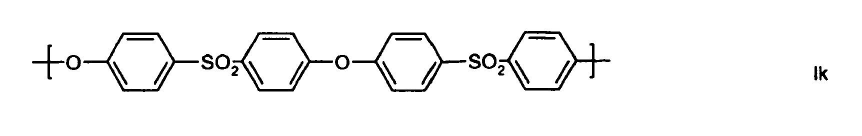

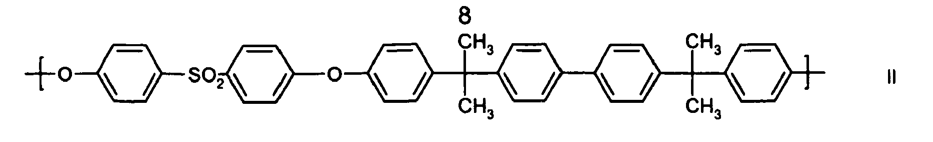

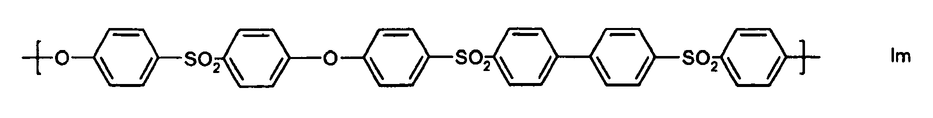

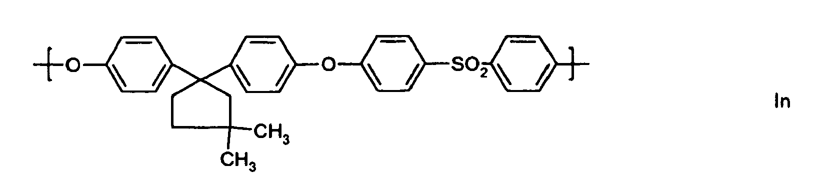

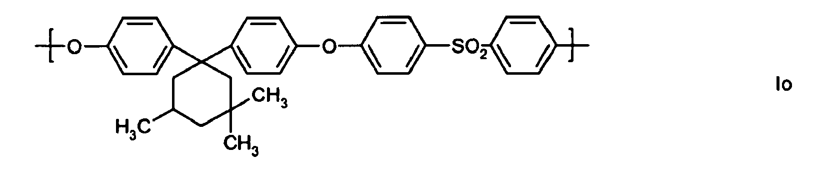

Zusätzlich zu den bevorzugt vorliegenden Bausteinen la bis Io sind auch solche Bausteine bevorzugt, in denen eine oder mehrere 1,4-Dihydroxyphenyl-Einheiten durch Resorcin- oder Dihydroxynaphthalin-Einheiten ersetzt sind.

Erfindungsgemäß kann die Komponente (a1) neben Bausteinen der allgemeinen Formel I noch aus von 0 bis 40 Gew.-% weiteren Bausteinen II aufgebaut sein, die ausgewählt sind aus Segmenten ein oder mehrerer thermoplastischer Polymere.

Bei der Komponente (a1) kann es sich dabei sowohl um Co- als auch um Blockcopolymere handeln, in denen Polyarylether-Segmente und Segmente von anderen thermoplastischen Polymeren, vorliegen. Die Molekulargewichte (Zahlenmittel) der Blöcke bzw. der Pfropfarme in den Copolymeren betragen in der Regel 1000 bis 30000 g/mol. Als Bausteine II bevorzugt sind Segmente von Polyamiden, Polyestern, aromatischen Polycarbonaten, Polyestercarbonaten, Polysiloxanen, Polyimiden oder Polyetherimiden. Die Blöcke unterschiedlicher Struktur können in den Copolymeren alternierend oder statistisch angeordnet sein.

In einer ersten bevorzugten Ausführungsform ist jedoch Komponente (a) aus 90 bis 99,9 Gew.-% Bausteine der allgemeinen Formel (I) und von 0,1 bis 10 Gew.-% der Komponente (a2) aufgebaut, d.h. Komponente (a1) enthält keine weiteren Bausteine II.

In einer weiteren bevorzugten Ausführungsform ist das Polyarylether-Copolymer der Komponente (a) aus Bausteinen der allgemeinen Formel (I) und aus weiteren Bausteinen II sowie aus Komponente (a2) aufgebaut. Sofern die Komponente (a1) neben Bausteinen der allgemeinen Formel I noch weitere Bausteine II auf Basis von thermoplastischen Polymeren enthält, dann ist Komponente (a1) vorzugsweise aus 50 bis 89,9 Gew.-%, insbesondere 50 bis 79,9 Gew.-%, Bausteine der allgemeinen Formel I und von 10 bis 40 Gew.-%, insbesondere von 10 bis 30 Gew.-% Bausteine II aufgebaut.

Ar ist in einer bevorzugten Ausführungsform abgeleitet von einer elektronenreichen, leicht elektrophil angreifbaren aromatischen Substanz, bevorzugt ausgewählt aus der Gruppe bestehend aus Hydrochinon, Resorcin, Dihydroxynaphthalin, insbesondere 2,7-Dihydroxynaphthalin, und 4,4'-Bisphenol.

Erfindungsgemäß ist die Komponente (a) neben Komponente (a1) außerdem aufgebaut aus (a2) von 0,1 bis 10 Gew.-% mindestens eines Vernetzers V, der wenigstens drei Hydroxyfunktionalitäten aufweist und im Polymer in umgesetzter Form vorliegt.

Die Verzweigung der Copolymer-Hauptketten wird erfindungsgemäß erreicht, indem zusätzlich zu der oben beschriebenen Komponente (a1) die Komponente (a) als weitere Komponente (a2) von 0,1 bis 10 Gew.-%, bevorzugt von 0,5 bis 7,5 Gew.-%, besonders bevorzugt von 1,0 bis 6,0 Gew.-%, ganz besonders bevorzugt von 1,5 bis 2,5 Gew.-%, jeweils bezogen auf das Gesamtgewicht der Komponente (a), mindestens ein Vernetzer V in umgesetzter Form enthält, wobei die Vernetzer V mindestens 3 Hydroxyfunktionalitäten aufweisen.

Die Vernetzer V liegen in der Komponente (a) somit in polymerer Form, das heißt sie liegen durch Umsetzung der Hydroxygruppen als Bestandteil des Polyarylether-Copolymers vor. Durch die Hydroxyfunktionalität von mindestens drei sind die Polyarylether-Copolymere der Komponente (a) verzweigt.

Da der Vernetzer V im Polymer in umgesetzter Form vorliegt, ist der Vernetzer V in umgesetzter Form von Verbindungen mit mindestens drei Hydroxyfunktionalitäten abgeleitet. Der Vernetzer V in umgesetzter Form kennzeichnet somit Vernetzungsstellen im Polymer, die über mindestens drei Sauerstoffatome mit Polymerketten verbunden sind. In einer weiteren Ausführungsform kann demzufolge als Ausgangsverbindung eine analoge Verbindung V' eingesetzt werden, die an Stelle der mindestens drei Hydroxyfunktionalitäten mindestens drei gegenüber Hydroxygruppen reaktive Gruppen enthält, insbesondere F oder CI.

Diese Vernetzer V werden bei der Polykondensation zur Herstellung der Polyarylether-Copolymere zugesetzt und werden wie die Di-Hydroxyverbindungen in die Polymerhauptkette eingebaut. Dadurch, dass die Vernetzer V noch wenigstens eine freie Hydroxyfunktion aufweisen, kommt es durch Kondensation eines geeigneten Monomers mit dieser wenigstens einen Hydroxyfunktion zu wenigstens einer Verzweigung der Polymerhauptkette. Die erfindungsgemäß einsetzbaren Vernetzer V können in monomerer Form auch vier Hydroxyfunktionalitäten aufweisen, so dass nach Einbau in die Polymerhauptkette noch zwei Hydroxyfunktionen für eine Verzweigung der Hauptkette zur Verfügung stehen.

Der Grad der Verzweigung der erfindungsgemäßen Polyarylether-Copolymere der Komponente (a) kann durch die Menge der in monomere Form wenigstens drei Hydroxyfunktionen aufweisenden Vernetzer V, und durch die Anzahl der vorliegenden Hydroxyfunktionen, vorzugsweise von drei bis fünf, eingestellt werden.

Die Vernetzer V sind vorzugsweise aromatische oder teilaromatische Verbindungen. Bevorzugte Vernetzer V weisen mindestens drei an aromatische Ringe geknüpfte Hydroxylgruppen auf, d.h. sie weisen mindestens drei phenolische Hydroxylgruppen auf.

Als Vernetzer V in monomerer Form seien insbesondere genannt:
Phloroglucin, 4,6-Dimethyl-2,4,6-Tri-(4-hydroxyphenyl)-hepten-2 (= trimeres Isopropenylphenol), 4,6-Dimethyl-2,4,6-Tri-(4-hydroxyphenyl)-heptan (= hydriertes primäres Isopropenylphenol), 1,3,5-Tri-(4-hydroxyphenyl)-benzol, 1,1,1-Tri-(4-hydroxy-phenyl)-ethan und -propan, Tetra-(4-hydroxyphenyl)-methan, 1,4-bis-[(4',4"-dihydroxytriphenyl)-methyl]-benzol und 2,2-bis-[4,4'-bis-(4-hydroxyphenyl)-cyclohexyl]-propan.

Als Vernetzer V besonders bevorzugt sind solche drei- oder mehr als dreiwertigen Phenole, die durch Umsetzung von p-alkylsubstituierten Monophenolen an unsubstituierten o-Stellungen mit Formaldehyd oder Formaldehyd liefernden Verbindungen herstellbar sind, wie beispielsweise das Trisphenol aus p-Kresol und Formaldehyd, das 2-6-bis-(2'-hydroxy-5'-methyl-benzyl)-4-methyl-phenol. Ferner kommen 2,6-bis-(2'-hydroxy-5'-isopropyl-benzyl)-4-isopropenyl-phenol und Bis-[2-hydroxy-3-(2'-hydroxy-5'-methylbenzyl-5-methyl-phenyl]-methan als Vernetzer V in Betracht.

Als Phenole mit mindestens drei Hydroxyfunktionalitäten kommen außerdem solche in Betracht, die zusätzlich zu den phenolischen Hydroxylgruppen Halogenatome aufweisen, zum Beispiel die halogenhaltigen Trihydroxyarylether der Formel (VI) 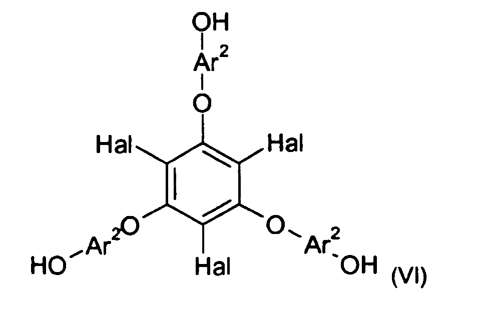 worin Ar² einen ein- oder mehrkernigen zweiwertigen aromatischen Rest und Hal Chlor oder Brom bedeuten. Beispiele für solche Verbindungen sind:
1,3,5-Tris-(4-Hydroxy-Phenoxy)-2,4,6-trichlorbenzol,
1,3,5-Tris-[4-(4-hydroxy-phenyl-isopropyl)-phenoxy]-2,4,6-trichlorbenzol,
1,3,5-Tris-[4-(4-hydroxy)-biphenoxy]-2,4,6-trichlorbenzol,
1,3,5-Tris-[4-(4-hydroxy-phenylsulfonyl)-phenoxy]-2,4,6-trichlorbenzol und
1,3,5-Tris-[4-(4-hydroxy-phenyl-isopropyl)-phenoxy]-2,4,6-tribrombenzol.

Die Herstellung dieser Verbindungen ist in der deutschen Offenlegungsschrift 1 768 620 beschrieben.

In einer besonders bevorzugten Ausführungsform ist der Vernetzer V ausgewählt aus 1,1,1-Tris(4-hydroxyphenyl)ethan (VII) 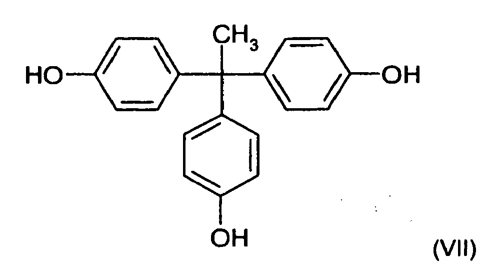 und aus (VII) abgeleitete Verbindungen. Ganz besonders bevorzugt ist der Vernetzer V ausgewählt aus 1,1,1-Tris(4-hydroxyphenyl)ethan.

Die Reinigung der Polyarylether-Copolymere erfolgt nach dem Fachmann bekannten Methoden, beispielsweise Umkristallisieren oder Waschen mit geeigneten Lösungsmitteln, in denen die erfindungsgemäßen Polyarylether-Copolymere bevorzugt größtenteils unlöslich sind.

Die Polyarylether-Copolymere der vorliegenden Erfindung weisen vorzugsweise gewichtsmittlere Molekulargewichte Mw von 10000 bis 150000 g/mol, insbesondere von 15000 bis 120000 g/mol, besonders bevorzugt von 18000 bis 100000 g/mol auf.

Die Polyarylether-Copolymere der vorliegenden Erfindung weisen vorzugsweise Viskositätszahlen, gemessen in 1 %-iger Lösung in N-Methylpyrrolidon bei 25°C, von 30 bis 200 ml/g, insbesondere von 35 bis 190 ml/g, besonders bevorzugt von 40 bis 180 ml/g auf.

### Komponente (b)

Erfindungsgemäß enthält die Komponente (b) von 5 bis 60 Gew.-% mindestens eines hydrophilen Polymers ausgewählt aus Polyvinylpyrrolidon, Polyvinylpyrrolidon-Copolymeren, Polyethylenglykol, Polypropylenglykol, Copolymeren aus Ethylenglykol und Propylenglykol, wasserlöslichen Cellulosederivaten, Polyamid, Polyvinylacetat und Polyvinylalkohol. Vorzugsweise sind die hydrophilen Polymere der Komponente (b) wasserlöslich oder durch Wasser quellbar.

Unter Polyvinylpyrrolidon wird das Homopolymer von N-Vinylpyrrolidon verstanden. Polyvinylpyrrolidon-Copolymere umfassen im Rahmen der vorliegende Erfindung Copolymere des N-Vinylpyrrolidons mit einem oder mehreren Comonomeren. Vorzugsweise enthält die Polymermischung als Komponente (b) von 5 bis 60 Gew.-% mindestens eines Polymers ausgewählt aus Polyvinylpyrroldidon und Polyvinylpyrrolidon-Copolymeren.

Die Vinylpyrollidon-Copolymere weisen vorzugsweise einen Vinylpyrrolidon-Anteil von mindestens 20 Gew.-% bezogen auf das Gesamtgewicht des Vinylpyrollidon-Copolymers auf. Als Comonomere kommen alle mit N-Vinylpyrrolidon radikalisch copolymerisierbaren Monomere in Betracht.

Vorzugsweise ist das mindestens eine Polyvinylpyrollidon-Copolymer aufgebaut aus (b1) von 30 bis 100 Gew.-%, insbesondere von 50 bis 100 Gew.-% eines Monomerbausteins gemäß Formel (III) 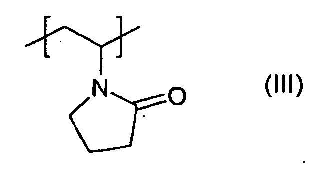 und (b2) von 0 bis 70 Gew.-%, insbesondere von 0 bis 50 Gew.-% weiterer Monomerbausteine, wobei die Summe der Gew.-% der Bausteine (b1) und (b2) 100 Gew.-% ergibt. Ein Polyvinylpyrrolidon-Copolymer mit 100 Gew.-% Monomerbausteinen (III) entspricht Polyvinylpyrroldidon.

Sofern Comonomere (b2) zum Einsatz kommen, liegt die Zahl der Comonomere im Vinylpyrrolidon-Copolymer vorzugsweise von 1 bis 4, insbesondere von 1 bis 2.

Geeignete Comonomere sind beispielsweise N,N-Dimethylaminomethyl(meth)acrylat, N,N-Diethylaminomethyl(meth)acrylat, N,N-Dimethylaminoethyl(meth)acrylat, N,N-Diethylaminoethyl-(meth)acrylat, N-[3-(dimethylamino)propyl]methacrylamid und N-[3-(dimethylamino)propyl]acrylamid.

Ebenfalls einsetzbare Comonomere sind substituierte Acrylsäuren sowie Salze, Ester und Amide davon, wobei die Substituenten an den Kohlenstoffatomen in der Zwei oder Drei-Position der Acrylsäure stehen, und unabhängig voneinander ausgewählt sind aus der Gruppe bestehend aus C₁-C₄-Alkyl, -CN, und COOH, im letztgenannten Fall insbesondere Methacrylsäure, Ethacrylsäure und 3-Cyanoacrylsäure.

Weitere geeignete Comonomere sind Alkylester von C₁-C₄₀ linearen, C₃-C₄₀ verzweigtkettigen oder C₃-C₄₀ carbocyclische, Vinyl- oder Allylhalogenide, bevorzugt Vinylchlorid und Allylchlorid, Vinylether, bevorzugt Methyl-, Ethyl-, Butyl- oder Dodecylvinylether, Vinylformamid, Vinylmethylacetamid, Vinylamin; andere Vinyllactame als Vinylpyrrolidon, insbesondere Vinylcaprolactam, Vinyl- oder Allyl-substituierte heterocyclische Verbindungen, bevorzugt Vinylpyridin, Vinyloxazolin und Allylpyridin.

Weiterhin kommen N-Vinylimidazole als Comonomere in Betracht, worin R⁹ bis R¹¹ unabhängig voneinander für Wasserstoff, C₁-C₄-Alkyl oder Phenyl steht:

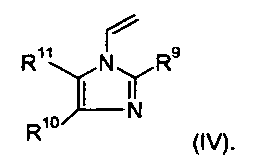

Darüber hinaus in Betracht kommende Comonomere sind Diallylamine der allgemeinen Formel 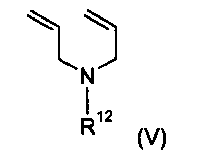 mit
R¹² = C₁- bis C₂₄-Alkyl.

Bevorzugte Comonomere sind Acrylsäure, Methacrylsäure, Ethylacrylsäure, Methylacrylat, Ethylacrylat, Propylacrylat, n-Butylacrylat, iso-Butylacrylat, t-Butylacrylat, 2-Ethylhexylacrylat, Decylacrylat, Methylmethacrylat, Ethylmethacrylat, Propylmethacrylat, n-Butylmethacrylat, iso-Butylmethacrylat, t-Butylmethacrylat, 2-Ethylhexylmethacrylat, Decylmethacrylat, Methylethacrylat, Ethylethacrylat, n-Butylethacrylat, iso-Butylethacrylat, t-Butyl-ethacrylat, 2-Ethylhexylethacrylat, Decylethacrylat, Stearyl(meth)acrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate, Glycerylmonoacrylat, Glycerylmonomethacrylat, Polyalkylenglykol(meth)acrylate, ungesättigte Sulfonsäuren wie zum Beispiel Acrylamidopropansulfonsäure; Acrylamid, Methacrylamid, Ethacrylamid, N-Methylacrylamid, N,N-Dimethylacrylamid, N-Ethylacrylamid, N-Isopropylacrylamid, N-Butylacrylamid, N-t-Butylacrylamid, N-Octylacrylamid, N-t-Octylacrylamid, N-Octadecylacrylamid, N-Phenylacrylamid, N-Methylmethacrylamid, N-Ethylmethacrylamid, N-Isopropylmethacrylamid, N-Dodecylmethacrylamid, 1-Vinylimidazol, 1-Vinyl-2-methylvinylimidazol, N,N-Dimethylaminomethyl(meth)acrylat, N,N-Diethylaminomethyl(meth)-acrylat, N,N-Dimethylaminoethyl(meth)acrylat, N,N-Diethylaminoethyl(meth)acrylat, N,N-Dimethylaminobutyl(meth)- acrylat, N,N-Diethylaminobutyl(meth)acrylat, N,N-Dimethylaminohexyl(meth)-acrylat, N,N-Dimethylaminooctyl(meth)acrylat, N,N-Dimethylaminododecyl(meth)acrylat, N-[3-(dimethylamino)propyl]methacrylamid, N-[3-(dimethylamino)propyl]acrylamid, N-[3-(dimethylamino)-butyl]methacrylamid, N-[8-(dimethylamino)octyl]methacrylamid, N-[12-(dimethylamino)dodecyl]methacrylamid, N-[3-(diethylamino)-propyl]methacrylamid, N-[3-(diethylamino)propyl]acrylamid, Maleinsäure, Fumarsäure, Maleinsäureanhydrid und seine Halbester, Crotonsäure, Itaconsäure, Diallyldimethylammoniumchlorid, Vinylether (zum Beispiel: Methyl-, Ethyl-, Butyl- oder Dodecylvinylether), Vinylformamid, N-Vinyl-N-Methylacetamid, Vinylamin, Methylvinylketon, Maleimid, Vinylpyridin, Vinylimidazol, Vinylfuran, Styrol, Styrolsulfonat, Allylalkohol, und Mischungen aus den vorgenannten Comonomeren.

Als Comonomere besonders bevorzugt sind Acrylsäure, Methacrylsäure, Maleinsäure, Fumarsäure, Crotonsäure, Maleinsäureanhydrid sowie dessen Halbester, Methylacrylat, Methylmethacrylat, Ethylacrylat, Ethylmethacrylat, n-Butylacrylat, n-Butylmethacrylat, t-Butylacrylat, t-Butylmethacrylat, Isobutylacrylat, Isobutylmethacrylat, 2-Ethylhexylacrylat, Stearylacrylat, Stearylmethacrylat, N-t-Butylacrylamid, N-Octylacrylamid, 2-Hydroxyethylacrylat, Hydroxypropylacrylate, 2-Hydroxyethylmethacrylat, Hydroxypropylmethacrylate, Alkylenglykol(meth)acrylate, Styrol, ungesättigte Sulfonsäuren wie zum Beispiel Acrylamidopropansulfonsäure, Vinylpyrrolidon, Vinylcaprolactam, Vinylether (z.B.: Methyl-, Ethyl-, Butyl- oder Dodecylvinylether), Vinylformamid, N-VinylN-Methylacetamid, Vinylamin, 1-Vinylimidazol, 1-Vinyl-2-methylimidazol, N,N-Dimethylaminomethylmethacrylat und N-[3-(dimethylamino)-propyl]methacrylamid; 3-Methyl-1-vinylimidazoliumchlorid, 3-Methyl-1-vinylimidazoliummethylsulfat, N,N-Dimethylaminoethylmethacrylat, N-Isopropylmethacrylamid, N-[3-(dimethylamino)-propyl]methacrylamid quaternisiert mit Methylchlorid, Vinylcaprolactam (VCAp), VI, 1-Vinyl-3-methylimidazolium Chlorid (OVI), Vinylacetat (VAc), (Meth)acrylamid, Dimethylaminoethyl(meth)acrylat und Dimethylaminoethyl(meth)acrylamid und deren quaternierten Analoga, Diallyldimethylammoniumchlorid, Vinylalkohol (durch Hydrolyse aus Vinylactetat nach Polymerisation), Vinylformamid (VFA), Vinylamin (insbesondere durch Hydrolyse aus VFA nach Polymerisation), Dimethylaminopropyl(meth)acrylat, Dimethylaminopropyl(meth)acrylamid, (Meth)acrylsäure, Vinylpiperidon, N,N-Dimethyl(meth)acrylamid, Tert-Butyl(meth)acrylamid, N-tert-Octyl(meth)acrylamid, Stearyl(meth)acrylamid, Methyl-, Ethyl-, Butyl-, tert-Butyl-(meth)acrylat, 2,3-Dihydroxypropyl(meth)acrylat, N-Isopropylacrylamid, Vinylpropionat, 1-Vinyl-2-Methylimidazol, Styrol, Vinylpyridin, Ester der (Meth)acrylsäure bzw. Ether von Allylalkohol und von Polyethylenoxid bzw. Propylenoxid bzw. Poly(ethylenoxid-copropylenoxid) mit insgesamt 2 bis 200 EO- bzw. PO-Einheiten bzw. EO-/PO-Einheiten mit Methoxygruppe oder Hydroxy-Gruppe am Kettenende, Maleinsäure, Fumarsäure, Methylvinylether, Hydroxyethyl(meth)acrylat, Hydroxypropyl(meth)acrylat, Vinyllactame, Vinyloxazoline wie Vinyloxazolin, Vinylmethyloxazolin, Vinylethyloxazolin, Acrylamidopropansulfonsäure, und Allylalkohol sowie Mischungen aus den vorgenannten Comonomeren.

Ganz besonders bevorzugt als Comonomere sind N-Vinyllactame wie N-Vinylcaprolactam (VCAp), N-Vinylformamid, ferner N-Vinylimidazol (VI), 1-Vinyl-3-methylimidazolium Chlorid (QVI), Vinylester aliphatischer Carbonsäuren wie Vinylacetat, Vinylpropionat, Vinylbutyrat, Vinyllaurat, Vinylstearat, ferner (Meth)acrylamid, Dimethylaminoethyl-(meth)acrylat und Dimethylaminoethyl(meth)acrylamid und deren quatemierten Analoga, und Diallyldimethylammoniumchlorid sowie Mischungen aus den vorgenannten Comonomeren.

Ganz besonders bevorzugte Vinylpyrrolidon-Copolymere sind schließlich Copolymere ausgewählt aus
- Copolymere aus N-Vinylpyrrolidon (VP) mit Vinylacetat mit einem Gewichtsverhältnis VP:VAc von 20:80 bis 80:20, insbesondere von 30:70 bis 70:30, vorzugsweise von 40:60 bis 60:40 sowie mit K-Werten von 10 bis 100, vorzugsweise von 20 bis 50;
- Copolymere aus VP und VI, insbesondere mit einem Gewichtverhältnis VP:VI von 40:60 bis 60:40; Copolymere aus VP und VCap, insbesondere mit einem Gewichtsverhältnis von 40:60 bis 60:40 und mit K-Werten von 10 bis 100, vorzugsweise von20 bis 60;
- Copolymere aus VP und 1-Vinyl-3-methylimidazoliumchlorid (vorzugsweise erhalten durch Quaternierung von 1-vinylimidazol mit Methylchlorid) mit einem Gewichtsverhältnis von VP/QVI von 20:80 bis 99:1 bevorzugt, wobei die Copolymere aus VP und 1-Vinyl-3-methylimidazoliumchlorid Molekulargewichte von 40.000 bis mehr als1.000.000 Dalton aufweisen können.

Ganz außerordentlich besonders bevorzugt als Komponente (b) ist Polyvinylpyrrolidon.

Vorzugsweise beträgt das gewichtsmittlere Molekulargewicht der Komponente (b) von 100.000 g/mol bis 1.000.000 g/mol.

Insbesondere werden erfindungsgemäß auch wässrige Lösungen von NVP-Homopolymeren mit K-Werten von 1 bis 150, vorzugsweise K10 bis K90, beispielsweise K12, K15, K 17, K25, K30, K60, K85, K90, stabilisiert. Die in der vorliegenden Erfindung angegebenen K-Werte werden bestimmt nach Fikentscher, Cellulosechemie 13,(1932) 58.

Die Herstellung solcher Polyvinylpyrrolidon-Copolymere durch radikalische Polymerisation kann durch an sich bekannte Verfahren erfolgen.

Die Polymerisation kann beispielsweise als Lösungspolymerisation in einem geeigneten Lösungsmittel wie Wasser, Gemischen aus Wasser und organischen Lösungsmitteln, beispielsweise Ethanol-Wasser oder Isopropanol-Wasser-Gemischen oder in rein organischen Lösungsmitteln wie Ethanol oder Isopropanol, erfolgen.

### Verfahren zur Herstellung der Polymermischung

Die vorliegende Erfindung betrifft auch die Herstellung der erfindungsgemäßen Polymerblends durch Mischen der Polyarylether-Copolymere in Lösung mit dem oder den weiteren Polymeren, ebenfalls in Lösung. Dazu werden die Polyarylether-Copolymere und die entsprechenden Polymere durch Auflösen in einem gemeinsamen Medium, wobei vor allem dipolar aprotische Lösungsmittel wie DMF, DMAC, NMP, DMSO, Sulfolan, N-Methylcaprolactam, Harnstoffe oder deren Mischungen geeignet sind, gemischt. Durch Entfernen des Lösungsmittels wird das innig vermischte Polymerblend erhalten.

Es ist des Weiteren auch möglich, dass die entsprechenden Polymerblends durch Ausfällen aus der gemeinsamen Lösung isoliert werden. Die weitere Aufarbeitung und Reinigung dieser Polymerblends wird nach dem Fachmann bekannten Methoden, beispielsweise Abdekantieren, Abfiltrieren oder Zentrifugieren und gegebenenfalls Waschen und/oder Trocknen, durchgeführt.

### Verfahren zur Herstellung von Membranen

Die Herstellung von Membranen unter Verwendung der erfindungsgemäßen Polymermischungen kann durch Anwendung dem Fachmann an sich bekannter Schritte oder Verfahren erfolgen.

Vorzugsweise werden Membrane enthaltend die erfindungsgemäßen Polymermischungen durch ein Verfahren hergestellt, welches folgende Schritte umfasst:
(i) Herstellen einer Lösung der erfindungsgemäßen Polymermischung enthaltend die Komponenten (a) und (b) in einem Lösungsmittel (C) und
(ii) Trennung der Polymermischung vom Lösungsmittel (C) unter Ausbildung der Polymermembran.

In Schritt (i) erfolgt somit das Herstellen einer Lösung der Komponenten (a) und (b) in einem Lösungsmittel (C). Als Lösungsmittel kommen solche in Betracht, in denen beide Komponenten (a) und (b) löslich sind, wobei unter löslich verstanden wird, dass sich bei Raumtemperatur mindestens 10 Gew.-%, vorzugsweise mindestens 20 Gew.-%, insbesondere mindestens 50 Gew.-% bezogen auf das Gesamtgewicht der Lösung im Lösungsmittel (C) lösen. Geeignete Lösungsmittel sind insbesondere dipolaraprotische Lösungsmittel.

Vorzugsweise wird die in Schritt (i) erhaltene Lösung vor der Durchführung von Schritt (ii) entgast. Der Fachmann wählt übliche, allgemein bekannte Verfahren zur Entgasung von Flüssigkeiten.

Bevorzugte Lösungsmittel sind N-Methylpyrrolidon, Dimethylacetamid, Dimethylsulfoxid, Dimethylformamid, Aceton, Acetaldehyd. Besonders bevorzugt sind N-Methylpyrrolidon, Dimethylacetamid, Dimethylsulfoxid, und Dimethylformamid.

Die Lösung kann in üblichen Behältnissen erfolgen, insbesondere in solchen, welche eine Rührvorrichtung und bevorzugt eine Vorrichtung zur Temperaturkontrolle vorsehen. Das Herstellen einer Lösung gemäß Schritt (i) des erfindungsgemäßen Verfahrens erfolgt bevorzugt unter Rühren. Die Lösung der Komponenten (a) und (b) kann nacheinander oder gleichzeitig erfolgen.

Die Dauer des Schrittes (i) kann in einem weiten Bereich variieren. Vorzugsweise beträgt die Dauer des Schrittes (i) von 10 Minuten bis 48 Stunden, insbesondere von 10 Minuten bis 12 Stunden, besonders bevorzugt von 15 Minuten bis 2 Stunden. Der Fachmann wählt die Dauer des Schrittes (i), so dass eine homogene Lösung der Komponenten (a) und (b) im Lösungsmittel (C) erhalten wird.

Vorzugsweise erfolgt die Durchführung des Schrittes (i) bei erhöhter Temperatur, insbesondere von 20°C bis 120°C, vorzugsweise von 40°C bis 100°C. Der Fachmann wählt die Temperatur insbesondere in Abhängigkeit vom Lösungsmittel (C).

Die bevorzugte Konzentration der Komponenten (a) und (b) im Lösungsmittel (C) hängt insbesondere von der Natur des Schrittes (ii) ab und wird weiter unten erläutert.

Anschließend erfolgt gemäß Schritt (ii) die Trennung der Polymermischung vom Lösungsmittel (C) unter Ausbildung der Polymermembran.

Grundsätzlich kann die Form der Polymermembrane variieren, wobei die Polymermembrane insbesondere in Form einer Folie, in Form einer Schicht auf einem Träger oder in Form einer Faser vorliegen. Im Rahmen einer bevorzugten Ausführungsform sind die Membrane gemäß der vorliegenden Erfindung Hohlfasermembrane, insbesondere Hohlfasermembrane für Dialyseanwendungen.

Sofern mittels des erfindungsgemäßen Verfahrens Hohlfasermembrane hergestellt werden, dann wird Schritt (ii) vorzugsweise mittels Nassverspinnen durchgeführt, das heißt, in die in Schritt (i) hergestellte Lösung wird in Schritt (ii) zu einer Faser nassversponnen. Sofern in Schritt (ii) ein Nassspinnverfahren zur Anwendung kommt, dann ist ein Trockendüsen-Nassspinnverfahren besonders bevorzugt.

Unter Trockendüsen-Nassspinnverfahren wird im Rahmen der vorliegenden Erfindung verstanden, dass Schritt (ii) folgende Schritte umfasst:
(ii-a) Extrudieren der Lösung aus Schritt (i) aus einer Düse in eine gasförmige Atmosphäre, insbesondere Luft, optional in Gegenwart einer Kernflüssigkeit; und
(ii-b) Einführen der in Schritt (ii-a) extrudierten Faser in mindestens ein Koagulationsbad umfassend jeweils ein Behälter und eine Koagulationsflüssigkeit.

Dabei kommt üblicherweise eine spezielle Düse mit Kern zum Einsatz, durch den während des Verspinnens vorzugsweise die Kernflüssigkeit gespült wird. Unter Kernflüssigkeit ist im Rahmen der vorliegenden Erfindung eine Flüssigkeit zu verstehen, die im Kern der Spinndüse mit der Polymerlösung in Kontakt kommt. Die Kernflüssigkeit besitzt koagulierende Eigenschaften und dient der Stabilisierung des Kerns der Hohlfaser während des Nassspinnverfahrens.

Der Abstand zwischen Düse und Koagulationslösung wird als Trockenzone bezeichnet und beträgt vorzugsweise von 0,1 bis 100 cm, insbesondere von 0,5 bis 50 cm, vorzugsweise von 1 bis 30 cm.

Die Struktur der Poren in der Hohlfaser wird durch die mindestens eine Koagulationsflüssigkeit beeinflusst, in denen die Komponente (a) und/oder die Komponente (b) vorzugsweise nicht oder nicht vollständig löslich ist. Die mindestens eine Koagulationsflüssigkeit verursacht ein zumindest partielles Ausfällen des zu verspinnenden Polymers im Koagulationsbad in Form einer Faser.

Als Koagulationsflüssigkeiten und als Kernflüssigkeiten kommen vorzugsweise Flüssigkeiten in Betracht, welche mit dem Lösungsmittel (C) vollständig mischbar sind unter der Voraussetzung, dass die Komponente (a) in der Koagulationsflüssigkeit nicht oder teilweise nicht löslich ist.

Der Fachmann wählt Kern- und Koagulationsflüssigkeiten in Bezug auf das Lösungsmittel (C) so, dass die Flüssigkeiten einerseits mischbar sind und andererseits im Anschluss an das Verspinnen abtrennbar, das heißt in reiner Form wieder gewinnbar, sind, wobei eine destillative Abtrennung bevorzugt ist.

Vorzugsweise wird als Kernflüssigkeit eine Mischung aus dem Lösungsmittel (C) und deionisiertem Wasser eingesetzt, insbesondere N-Methylpyrrolidon und Wasser. Das Mischungsverhältnis (Gewichtsverhältnis) beträgt vorzugsweise von 3:1 bis 1:3, besonders bevorzugt von 2:1 bis 1:2, insbesondere 1,3:1 bis 1:1.

Als Koagulationsflüssigkeiten in den Koagulationsbädern werden vorzugsweise mindestens ein aliphatischer Alkohol oder Wasser oder ein Gemisch aus den beiden vorgenannten Verbindungen eingesetzt. Besonders bevorzugt wir im Rahmen des Schrittes (ii-b) des erfindungsgemäßen Verfahrens in einem ersten Koagulationsbad ein aliphatischer Alkohol, insbesondere Ethanol oder Isopropanol, gegebenenfalls im Gemisch mit Wasser, und in einem zweiten Koagulationsbad Wasser eingesetzt.

Vorzugsweise werden die Komponenten (a) und (b) im erfindungsgemäßen Verfahren in wasserfreier Form eingesetzt. Unter wasserfrei soll verstanden werden, dass der Wassergehalt in der in Schritt (a) hergestellten Lösung weniger als 5 Gew.-%, vorzugsweise weniger als 2 Gew.-%, insbesondere weniger als 1 Gew.-% beträgt. Zur Trocknung kommen dem Fachmann bekannte Verfahren in Betracht, insbesondere die Anwendung von erhöhter Temperatur und/oder Vakuum.

Vorzugsweise enthält die in Schritt (ii) eingesetzte Lösung von 5 bis 40 Gew.-%, insbesondere von 10 bis 30 Gew.-%, der Polymermischung aus den Komponenten (a) und (b) bezogen auf das Gesamtgewicht der Lösung einschließlich des Lösungsmittels (C).

Vorzugsweise weist Komponente (b) im Rahmen des erfindungsgemäßen Verfahrens ein gewichtsmittleres Molekulargewicht von 100.000 g/mol bis 1.000.000 g/mol auf, insbesondere von 200.000 g/mol bis 600.000 g/mol.

Nach der Durchführung der Schritte (i) und (ii) des erfindungsgemäßen Verfahrens erfolgt optional (iii) die Aufbereitung der Membran, wobei unter Aufbereitung ein oder mehrere Schritte ausgewählt aus Reinigung, Auswaschen und Nachvernetzung durchgeführt werden.

Die erfindungsgemäßen Membranen, insbesondere die erfindungsgemäßen Hohlfasermembranen, weisen eine hohe mechanische Belastbarkeit im Dauergebrauch auf. Sie besitzen eine niedrige Ausschlussgrenze bei der Ultrafiltration, insbesondere der Dialyse.

Die folgenden Beispiele erläutern die Erfindung näher, ohne sie einzuschränken.

### Beispiele

Die Viskositätszahl der Polyarylether wurde in 1 %-iger Lösung von N-Methylpyrrolidon bei 25°C bestimmt nach ISO 1628.

Zur Bestimmung der Glastemperatur der Polymermischungen wurden getrocknete Polymermischungen mit einer Aufheizrate von 20 K/min von Raumtemperatur auf 280°C erhitzt. Die in Tabelle 1 aufgeführte Glastemperatur wurde beim zweiten Aufheizen bestimmt. Verwendet wurde ein DSC-Instrument der Firma Perkin-Elmer vom Typ Pyris-1.

Für die Ultrafiltrationsexperimente wurden jeweils 10 gefriergetrocknete Fasern der Länge 25 cm zu einem Bündel zusammengefügt. Beide Enden wurden mit einem kommerziellen Epoxyharz versiegelt. Nach Aushärtung des Epoxyharzes wurde das Faserbündel in die Prüfapparatur eingebaut.

Zur Beurteilung der Trennwirkung wurden bei den Ultrafiltrationsexperimenten Polyethylenglykolstandards mit Molekulargewichten von 600 bis 900000 g/mol verwendet. Die Polymerlösung fließt bei diesem Experiment durch die Hohlfasern, während außerhalb der Hohlfaser Elektrolytlösung im Gegenstrom fließt, d.h. die innere Schicht der Hohlfasermembran ist die aktive Schicht. Die Konzentration an Polyethylenglykol in der Ausgangslösung betrug 200 ppm. Die Trennexperimente wurden bei einem Druck von 8*10⁻⁴ Pa durchgeführt. Für alle Membrane wurde der Fluss an reinem Wasser (PWP) bestimmt. Die Trenneigenschaften wurden bestimmt, indem der Anteil an Polyethylenglykol in der Ausgangslösung und im Permeat ermittelt wurden. Die Bestimmung erfolgte durch die Bestimmung des Kohlenstoffanteils mit einem Total Organic Carbon Analyser der Firma Shimadzu, Typ ASI-5000A.

Hieraus wurde der Trennfaktor R nach folgender Formel berechnet: R=(1-Cp/Cf)*100, wobei Cf bzw. Cp Konzentration an Polyethylenglykol in der Ausgangslösung (feed) bzw. im Permeat darstellen.

Unter Ausschlussgrenze wird im Rahmen der vorliegenden Erfindung das Molekulargewicht (MWCO) verstanden, bei dem eine 90 gew.-%ige Trennung von PEG erreicht wurde. Die Ergebnisse der Prüfungen sind in den Tabellen 1 und 2 aufgeführt.

### Herstellung der Polymermischungen

Als Komponente (a-1) wurde ein verzweigter Polyarylether eingesetzt, erhalten durch nucleophile aromatische Polykondensation von 576,16 g Dichlordiphenylsulfon, 485,33 Dihydroxydiphenylsulfon und 12,25 g 1,1,1-Tris-(4-hdyroxypheny)ethan unter Einwirkung von 290,24 g Kaliumcarbonat in 1000 ml N-Methylpyrrolidon (NMP). Diese Mischung wurde 3,5 Stunden bei 195°C gehalten. Nach Abkühlung auf 120°C wurde für 1 Stunde Methylchlorid in die Lösung eingeleitet. Danach wurde der Ansatz durch Zugabe von 1000 ml NMP verdünnt, die festen Bestandteile wurden durch Filtration abgetrennt und das Polymere durch Fällung in NMP/Wasser im Gewichtsverhältnis 1 zu 9 isoliert. Nach sorgfältigem Waschen mit Wasser wurde das Produkt im Vakuum bei 120°C für 12 h getrocknet. Die Viskositätszahl des Produkts lag bei 81,9 ml/g, die Glastemperatur betrug 226°C.

Die Vergleichskomponente (a-V2) war Ultrason E 6020 P der Firma BASF, ein hochviskoses lineares Polyethersulfon (PESU nach Nomenklatur der ISO 1043) mit einer Glasübergangstemperatur von 224°C.

Als Komponenten (b-1) wurde Polyvinylpyrrolidon der Firma Merck mit einem Molekulargewicht (Mw) von 360.000 g/mol und einer Glasübergangstemperatur von 176°C eingesetzt.

Die Polymermischungen wurden durch Lösen der Komponenten (a) und Polyvinylpyrrolidon (PVP) als Komponente (b) in Dimethylformamid als Lösungsmittel (C) hergestellt. Dazu wurden entsprechende Mengen der beiden Blendpartner als jeweils 5 %-ige Lösung hergestellt. Die Lösungen wurden anschließend gemischt und in Glasschalen gegossen. Durch Anlegen von Vakuum wurde das Lösungsmittel langsam entzogen. Anschließend wurde die Temperatur in Schritten von 20°C auf 160°C erhöht. Die Proben wurden bei jedem Schritt 4 h bei der betreffenden Temperatur gehalten.

**Tabelle 1: Zusammensetzung und Glasübergangstemperatur der Polymermischungen**

| Komponente | V1 | V2 | V3 | V4 | V5 | 6 | 7 | 8 | 9 | 10 |
|---|---|---|---|---|---|---|---|---|---|---|
| a-V2 [Gew.-%] | 80 | 70 | 60 | 50 | 30 | - | - | - | - | - |
| a-1 [Gew.-%] | - | - | - | - | - | 80 | 70 | 60 | 50 | 30 |
| PVP | 20 | 30 | 40 | 50 | 70 | 20 | 30 | 40 | 50 | 70 |
| Tg[°C] | 190 | 186 | 182 | 181 | 178 | 203 | 200 | 199 | 195 | 187 |

### Herstellung der Hohlfasermembranen

Die Lösungen zur Herstellung der Hohlfasermembranen wurden wie folgt hergestellt: Zuerst wurde der Polyarylether a-1 beziehungsweise a-V2 als Komponente (a) in NMP gelöst. Anschließend wurde PVP als Komponente (b) zu dieser Lösung hinzugefügt, bis die Zusammensetzung 16/10/74 Gew.-% (a-1/b-1/NMP) erreicht wurde. Diese Lösung wurde anschließend 48 h bei Raumtemperatur gerührt. Vor dem Verspinnen wurden die Lösungen 1 Tag entgast.

Die Herstellung der Hohlfasermembranen erfolgte im Trockendüsen-Nassspinnverfahren gemäß der Publikation Q. Yang, T.S. Chung, Y.E. Santoso., Journal of Membrane Science, 2007, 290, Seiten 153-163.

Die Zusammensetzung der Kernflüssigkeit war dabei 55:45 Gewichtsteile
NMP:deionisiertes Wasser. Die Distanz zwischen der Spinndüse und dem Fällbad betrug 20 cm. Zur Fällung wurde ein 2-stufiger Fällprozess mit Isopropanol als erste Koagulationsflüssigkeit im ersten Fällbad und Wasser als zweite Koagulationsflüssigkeit im zweiten Fällbad verwendet. Die Abzugsgeschwindigkeit der Fasern war gleich der Spingeschwindigkeit (8,6 cm/s). Anschließend wurden die Fasern 3 Tage in Wasser gelagert. Um das Lösungsmittel vollständig abzutrennen, wurden die Fasern anschließend 3 mal 30 Minuten in Methanol und anschließend in frischem Hexan gelagert. Die Fasern wurden anschließend gefriergetrocknet.

**Tabelle 2: Eigenschaften der Hohlfasermembrane, wobei sich die angegebene Zusammensetzung auf die eingesetzte Polymermischung vor dem Verspinnen bezieht.**

| Versuch | V11 | 12 |
|---|---|---|
| a-1 [Gew.-%] | - | 61,5 |
| a-V2 [Gew.-%] | 61,5 | - |
| b-1 [Gew.-%] | 38,5 | 38,5 |
| PWP [l/m²*bar*h] | 5,43 | 6,65 |
| MWCO [g/mol] | 8420 | 5610 |

Die Membran auf Basis des verzweigten PES zeigte eine höhere Wasserdurchlässigkeit (PWP) bei gleichzeitig verbesserter Ausschlussgrenze MWCO.

## Patentansprüche

1. Polymermischung, enthaltend die Komponenten
(a) von 40 bis 95 Gew.-% mindestens eines Polyarylether-Copolymers aufgebaut aus
(a1) von 50 bis 99,9 Gew.-% Bausteine der allgemeinen Formel I 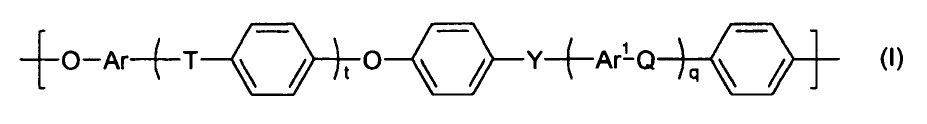 mit folgenden Bedeutungen
t, q: unabhängig voneinander 0, 1, 2 oder 3,
Q, T, Y: unabhängig voneinander jeweils eine chemische Bindung oder Gruppe ausgewählt aus -O-, -S-, -SO₂-, S=O, C=O, -N=N-, -R^{a}C=CR^{b} und -CR^{c}R^{d}-, wobei R^{a} und R^{b} unabhän- gig voneinander jeweils für ein Wasserstoffatom oder eine C₁-C₁₂-Alkylgruppe stehen und R^{c} und R^{d} unabhängig voneinander jeweils für ein Wasserstoffatom oder eine C₁- C₁₂-Alkyl-, C₁-C₁₂-Alkoxy- oder C₆-C₁₈-Arylgruppe stehen, wobei wenigstens eines aus Q, T und Y von -O- verschie- den ist, und wenigstens eines aus Q, T und Y für -SO₂- steht und
Ar, Ar¹: unabhängig voneinander C₆-C₁₈-Arylengruppe,
von 0 bis 40 Gew.-% weitere Bausteine II ausgewählt aus Segmenten ein oder mehrerer thermoplastischer Polymere, und
(a2) von 0,1 bis 10 Gew.-% mindestens eines Vernetzers V, der wenigstens drei Hydroxyfunktionalitäten aufweist, wobei der mindestens eine Vernetzer V in Komponente (a) in umgesetzter Form vorliegt und die Summe der Gew.-% aus (a1) und (a2) 100 Gew.-% ergibt,
und
(b) von 5 bis 60 Gew.-% mindestens eines hydrophilen Polymers ausgewählt aus Polyvinylpyrrolidon, Polyvinylpyrrolidon-Copolymeren, Polyethylenglykol, Polypropylenglykol, Copolymeren aus Ethylenglykol und Propylenglykol, wasserlöslichen Cellulosederivaten, Polyamid, Polyvinylacetat und Polyvinylalkohol,
wobei die Summe der Gew.-% aus Komponente (a) und (b) 100 Gew.-% ergibt.

2. Polymermischung nach Anspruch 1, wobei die Polymermischung als Komponente (b) von 10 bis 60 Gew.-% mindestens eines Polyvinylpyrrolidon-Copolymers enthält.

3. Polymermischung nach Anspruch 1 oder 2, wobei das mindestens eine Polyvinylpyrollidon-Copolymer aufgebaut ist aus
(b1) von 30 bis 100 Gew.-% eines Monomerbausteins gemäß Formel (III) 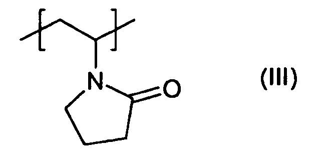 und
(b2) von 0 bis 70 Gew.-% weiterer Monomerbausteine,
wobei die Summe der Gew.-% der Bausteine (b1) und (b2) 100 Gew.-% ergibt.

4. Polymermischung nach den Ansprüchen 1 bis 3, wobei das gewichtsmittlere Molekulargewicht der Komponente (b) von 100.000 g/mol bis 1.000.000 g/mol beträgt.

5. Polymermischung nach den Ansprüchen 1 bis 4, wobei als Vernetzer V mindestens eine organische Verbindung mit mindestens drei phenolischen Hydroxylgruppen in umgesetzter Form enthalten ist.

6. Polymermischung nach den Ansprüchen 1 bis 5, wobei als Vernetzer V 1,1,1-Tris-(4-Hydroxyphenyl)ethan in umgesetzter Form enthalten ist.

7. Polymermischung nach den Ansprüchen 1 bis 6, wobei Q, T und Y in Komponente (a) unabhängig voneinander -O- oder -SO₂- bedeutet.

8. Polymermischung nach den Ansprüchen 1 bis 7, wobei Ar in Komponente (a) ausgewählt ist aus der Gruppe bestehend aus 1,4-Phenylen, 1,3-Phenylen, Naphthalen und 4,4'-Bisphenylen.

9. Polymermischung nach den Ansprüchen 1 bis 8, wobei Ar¹ in Komponente (a) Phenylen oder Naphthylen bedeutet.

10. Kombination umfassend als getrennt vorliegende Teile Komponente (a) und Komponente (b) gemäß den Ansprüchen 1 bis 9 zur gemeinsamen Anwendung.

11. Polymermembran, enthaltend eine Polymermischung gemäß den Ansprüchen 1 bis 9.

12. Polymermembran nach Anspruch 11, wobei die Polymermembran eine Hohlfasermembran ist.

13. Verfahren zur Herstellung von Polymermembranen umfassend
(i) Herstellen einer Lösung einer Polymermischung gemäß den Ansprüchen 1 bis 9 in einem Lösungsmittel (C) und
(ii) Trennung der Polymermischung vom Lösungsmittel (C) unter Ausbildung der Polymermembran.

14. Verfahren zur Herstellung von Polymermembranen gemäß Anspruch 13, wobei die Polymermembrane Hohlfasermembrane sind.

15. Verfahren zur Herstellung von Polymermembranen nach den Ansprüchen 13 oder 14, wobei die Trennung der Polymermischung und des Lösungsmittels (C) in Schritt (ii) durch Verspinnen der in Schritt (i) erhaltenen Lösung erfolgt.

16. Verfahren zur Herstellung von Polymermembranen gemäß Anspruch 15, wobei in Schritt (ii) das Verspinnen der in Schritt (i) erhaltenen Lösung durch Trockendüsen-Nasspinnverfahren erfolgt.

17. Verfahren nach Anspruch 16, wobei die in Schritt (ii) eingesetzte Lösung von 5 bis 40 Gew.-% der Polymermischung bezogen auf das Gesamtgewicht der Lösung einschließlich des Lösungsmittels (C) enthält.

18. Hohlfasermembran, erhältlich nach einem Verfahren gemäß den Ansprüchen 13 bis 17.

19. Verwendung einer Polymermischung gemäß den Ansprüchen 1 bis 9 zur Herstellung von Polymermembranen.

20. Verwendung einer Polymermischung gemäß den Ansprüchen 1 bis 9 zur Herstellung von Dialysefiltern.

21. Dialysefilter, enthaltend Hohlfasermembrane gemäß Anspruch 18.

## Claims

1. A polymer blend comprising the components
(a) from 40% to 95% by weight of at least one polyaryl ether copolymer constructed of
(a1) from 50% to 99.9% by weight of building units of the general formula I 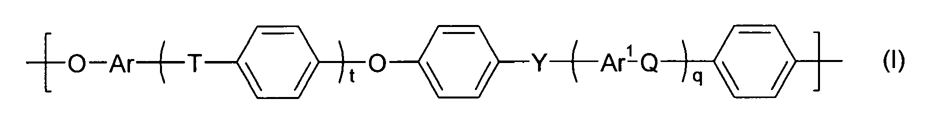 having the following meanings:
t, q: independently 0, 1, 2 or 3,
Q, T, Y: each independently a chemical bond or group selected from -O-, -S-, -SO₂-, S=O, C=O, -N=N-, -RₐC=CR^{b} and -CR^{c}R^{d}-, where R^{a} and R^{b} are each independently a hydrogen atom or a C₁-C₁₂-alkyl group and R^{c} and R^{d} are each independently a hydrogen atom or a C₁-C₁₂-alkyl, C₁-C₁₂-alkoxy or C₆-C₁₈-aryl group, at least one of Q, T and Y being other than -O- and at least one of Q, T and Y being -SO₂-, and
Ar, Ar¹: independently C₆-C₁₈-arylene,
from 0% to 40% by weight of further building units II selected from segments of one or more thermoplastic polymers, and
(a2) from 0.1 % to 10% by weight of at least one crosslinker V having at least three hydroxyl functionalities, the at least one crosslinker V being present in component (a) in converted form and the sum total of % by weight for (a1) and (a2) being 100% by weight,
and
(b) from 5% to 60% by weight of at least one hydrophilic polymer selected from polyvinylpyrrolidone, polyvinylpyrrolidone copolymers, polyethylene glycol, polypropylene glycol, copolymers of ethylene glycol and propylene glycol, water-soluble cellulose derivatives, polyamide, polyvinyl acetate and polyvinyl alcohol,
where the sum total of % by weight for components (a) and (b) is 100% by weight.

2. The polymer blend according to claim 1 comprising as component (b) from 10% to 60% by weight of at least one polyvinylpyrrolidone copolymer.

3. The polymer blend according to claim 1 or 2 wherein the at least one polyvinylpyrollidone copolymer is constructed of
(b1) from 30% to 100% by weight of a monomeric building unit as per formula (III) 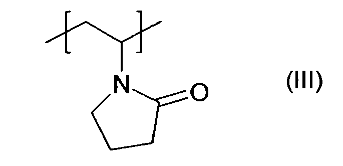 and
(b2) from 0% to 70% by weight of further monomeric building units,
where the sum total of % by weight for building units (b1) and (b2) is 100% by weight.

4. The polymer blend according to the claims 1 to 3 wherein the weight average molecular weight of component (b) is in the range from 100 000 g/mol to 1 000 000 g/mol.

5. The polymer blend according to the claims 1 to 4 wherein crosslinker V comprises at least one organic compound having at least three phenolic hydroxyl groups in converted form.

6. The polymer blend according to the claims 1 to 5 wherein crosslinker V comprises 1,1,1-tris(4-hydroxyphenyl)ethane in converted form.

7. The polymer blend according to the claims 1 to 6 wherein Q, T and Y in component (a) are independently -O- or -SO₂-.

8. The polymer blend according to the claims 1 to 7 wherein Ar in component (a) is selected from the group consisting of 1,4-phenylene, 1,3-phenylene, naphthalene and 4,4'-bisphenylene.

9. The polymer blend according to the claims 1 to 8 wherein Ar¹ in component (a) is phenylene or naphthylene.

10. A combination comprising as distinct parts component (a) and component (b) according to the claims 1 to 9 for conjoint use.

11. A polymer membrane comprising a polymer blend according to the claims 1 to 9.

12. The polymer membrane according to claim 11 being a hollow fiber membrane.

13. A process for producing a polymer membrane, which comprises
(i) producing a solution of a polymer blend according to the claims 1 to 9 in a solvent (C) and
(ii) separating the polymer blend from the solvent (C) to form the polymer membrane.

14. The process for producing a polymer membrane according to claim 13 wherein the polymer membrane is a hollow fiber membrane.

15. The process for producing a polymer membrane according to the claims 13 or 14 wherein the separating of the polymer blend and of the solvent (C) in step (ii) is effected by spinning the solution obtained in step (i).

16. The process for producing a polymer membrane according to claim 15 wherein the spinning in step (ii) of the solution obtained in step (i) is effected by dry-jet wet-spinning.

17. The process according to claim 16 wherein the solution used in step (ii) comprises from 5% to 40% by weight of the polymer blend based on the total weight of the solution including the solvent (C).

18. A hollow fiber membrane obtainable by a process according to the claims 13 to 17.

19. The use of a polymer blend according to the claims 1 to 9 for producing a polymer membrane.

20. The use of a polymer blend according to the claims 1 to 9 for producing a dialysis filter.

21. A dialysis filter comprising a hollow fiber membrane according to claim 18.

## Revendications

1. Mélange de polymères, contenant les composants
(a) de 40 à 95 % en poids d'au moins un copolymère de polyaryléther formé à partir de
(a1) de 50 à 99,9 % en poids de composants de formule générale I 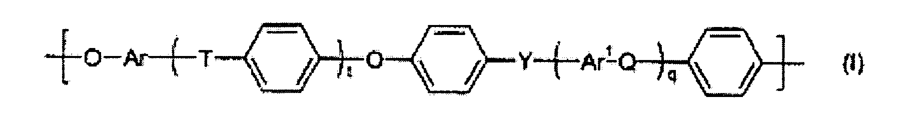 avec les significations suivantes :
t, q : indépendamment l'un de l'autre 0, 1, 2 ou 3,
Q, T, Y : à chaque fois indépendamment les uns des autres une liaison chimique ou un groupe choisi parmi - O-, -S-, -SO₂-, S=O, C=O, -N=N-, -R^{a}C=CR^{b} et -CR^{c}R^{d}-, R^{a} et R^{b} représentant à chaque fois indépendamment l'un de l'autre un atome d'hydrogène ou un groupe alkyle en C₁-C₁₂ et R^{c} et R^{d} représentant à chaque fois indépendamment l'un de l'autre un atome d'hydrogène ou un groupe alkyle en C₁-C₁₂, alcoxy en C₁-C₁₂ ou aryle en C₆-C₁₈, Q et/ou T et/ou Y étant différent de -O- et Q et/ou T et/ou Y représentant -SO₂-, et
Ar, Ar¹ : indépendamment l'un de l'autre un groupe arylène en C₆-C₁₈,
de 0 à 40 % en poids de composants II supplémentaires choisis parmi des segments d'un ou de plusieurs polymères thermoplastiques, et
(a2) de 0,1 à 10 % en poids d'au moins un agent de réticulation V, qui comprend au moins trois fonctionnalités hydroxy, le ou les agents de réticulation V étant présents sous forme réagie dans le composant (a) et la somme des % en poids de (a1) et (a2) étant de 100 % en poids
et
(b) de 5 à 60 % en poids d'au moins un polymère hydrophile choisi parmi la polyvinylpyrrolidone, les copolymères de polyvinylpyrrolidone, le polyéthylène glycol, le polypropylène glycol, les copolymères d'éthylène glycol et de propylène glycol, les dérivés de cellulose solubles dans l'eau, le polyamide, le polyacétate de vinyle et l'alcool polyvinylique,
la somme des % en poids du composant (a) et du composant (b) étant de 100 % en poids.

2. Mélange de polymères selon la revendication 1, dans lequel le mélange de polymères contient de 10 à 60 % en poids d'au moins un copolymère de polyvinylpyrrolidone en tant que composant (b).

3. Mélange de polymères selon la revendication 1 ou 2, dans lequel le ou les copolymères de polyvinylpyrrolidone sont formés à partir de
(b1) de 30 à 100 % en poids d'un composant monomère de formule (III) 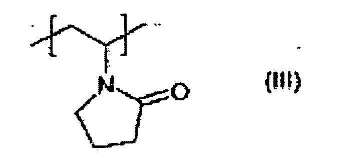 et
(b2) de 0 à 70 % en poids de composants monomères supplémentaires,
la somme des % en poids des composants (b1) et (b2) étant de 100 % en poids.

4. Mélange de polymères selon les revendications 1 à 3, dans lequel le poids moléculaire moyen en poids du composant (b) est de 100 000 g/mol à 1 000 000 g/mol.

5. Mélange de polymères selon les revendications 1 à 4, dans lequel au moins un composé organique contenant au moins trois groupes hydroxyle phénoliques est contenu sous forme réagie en tant qu'agent de réticulation V.

6. Mélange de polymères selon les revendications 1 à 5, dans lequel du 1,1,1-tris-(4-hydroxyphényl)éthane est contenu sous forme réagie en tant qu'agent de réticulation V.

7. Mélange de polymères selon les revendications 1 à 6, dans lequel Q, T et Y dans le composant (a) signifient indépendamment les uns des autres -O- ou - SO₂-.

8. Mélange de polymères selon les revendications 1 à 7, dans lequel Ar dans le composant (a) est choisi dans le groupe constitué par le 1,4-phénylène, le 1,3-phénylène, le naphtalène et le 4,4'-bisphénylène.

9. Mélange de polymères selon les revendications 1 à 8, dans lequel Ar¹ dans le composant (a) signifie phénylène ou naphtylène.

10. Combinaison comprenant en tant que parties présentes séparément le composant (a) et le composant (b) selon les revendications 1 à 9 pour une utilisation commune.

11. Membrane polymère, contenant un mélange de polymères selon les revendications 1 à 9.

12. Membrane polymère selon la revendication 11, dans laquelle la membrane polymère est une membrane fibre creuse.

13. Procédé de fabrication de membranes polymères, comprenant
(i) la fabrication d'une solution d'un mélange de polymères selon les revendications 1 à 9 dans un solvant (C) et
(ii) la séparation du mélange de polymères du solvant (C) pour former la membrane polymère.

14. Procédé de fabrication de membranes polymères selon la revendication 13, dans lequel les membranes polymères sont des membranes fibres creuses.

15. Procédé de fabrication de membranes polymères selon les revendications 13 ou 14, dans lequel la séparation du mélange de polymères et du solvant (C) à l'étape (ii) a lieu par filage de la solution obtenue à l'étape (i).

16. Procédé de fabrication de membranes polymères selon la revendication 15, dans lequel le filage à l'étape (ii) de la solution obtenue à l'étape (i) a lieu par un procédé de filage humide à jet sec.

17. Procédé selon la revendication 16, dans lequel la solution utilisée à l'étape (ii) contient de 5 à 40 % en poids du mélange de polymères par rapport au poids total de la solution incluant le solvant (C).

18. Membrane fibre creuse, pouvant être obtenue par un procédé selon les revendications 13 à 17.

19. Utilisation d'un mélange de polymères selon les revendications 1 à 9 pour la fabrication de membranes polymères.

20. Utilisation d'un mélange de polymères selon les revendications 1 à 9 pour la fabrication de filtres de dialyse.

21. Filtre de dialyse, contenant des membranes fibres creuses selon la revendication 18.
